# EUROPÄISCHE PATENTSCHRIFT

(11) **EP 0 986 720 B1**
(45) Veröffentlichungstag und Bekanntmachung des Hinweises auf die Patenterteilung: **15.05.2002**
(21) Anmeldenummer: 98913740.1
(22) Anmeldetag: 28.03.1998
(51) Int. Cl.: F23K 1/04, F23J 15/02

(54) **VERFAHREN ZUR BESCHICKUNG DER VERBRENNUNGSEINHEIT EINES KOHLEKRAFTWERKS**
METHOD FOR CHARGING THE COMBUSTION UNIT OF A COAL-FUELLED POWER STATION
PROCEDE DE CHARGEMENT DE L'UNITE DE COMBUSTION D'UNE CENTRALE THERMIQUE AU CHARBON

(30) Priorität: 03.06.1997 DE 19723145
(43) Veröffentlichungstag der Anmeldung: 22.03.2000
(73) Patentinhaber: Forschungszentrum Karlsruhe GmbH, 76133 Karlsruhe (DE)
(72) Erfinder: HUNSINGER, Hans, D-76356 Weingarten (DE); KREISZ, Siegfried, D-76149 Karlsruhe (DE); SEIFERT, Helmut, D-67069 Ludwigshafen (DE); VEHLOW, Jürgen, D-76133 Karlsruhe (DE)
(86) Internationale Anmeldenummer: EP9801842
(87) Internationale Veröffentlichungsnummer: WO9855803

(56) Entgegenhaltungen:
- EP-A- 0 324 454
- DE-A- 4 208 355
- DE-A- 4 442 136
- DE-C- 19 646 099

## Beschreibung

Die Erfindung betrifft ein Verfahren zur Beschickung der Verbrennungseinheit eines Kohlekraftwerkes gemäß dem Oberbegriff des ersten Patentanspruchs.

Die DE 44 42 136 A1 offenbart ein Verfahren zur Beschickung der Verbrennungseinheit eines Kohlekraftwerks, bei dem die Kohle zumindest teilweise mit Hilfe eines Rauchgasstroms in die Verbrennungseinheit gefördert wird, und als Rauchgasstrom der Rauchgasstrom einer Müllverbrennungsanlage eingesetzt wird.

Aus J. Zelkowski: Kohleverbrennung, VEB Kraftwerkstechnik GmbH (1986), Seiten 233 ff. ist es bekannt, daß bei der sogenannten Staubfeuerung feingemahlene Kohle mit Hilfe von Rauchgas in die Verbrennungseinheit eines Kohlekraftwerks gefördert wird. Als Rauchgas wird hierbei rezykliertes Rauchgas des Kohlekraftwerks eingesetzt. Die Staubfeuerung bietet im Vergleich zu Festbettfeuerungen eine Reihe von Vorteilen.

Aus der DE 37 33 831 A1 ist bekannt, eine Wirbelschichtfeuerung zur Verbrennung von organischem Material wie z. B. Müll in Kombination mit dem Dampferzeuger einer Kohleverbrennungseinrichtung zu betreiben. Dabei wird das Ruchgas der Wirbelschichtfeuerung unmittelbar in die Feuerungszone des Dampferzeugers geleitet. Die Einspeisung von Kohle in den Dampferzeuger erfolgt separat.

Aus der DE 43 13 102 A1 ist ein Verfahren zum Reduzieren der Abgasmengen zur Eliminierung von NOₓ-Emissionen bei der Verbrennung, vorzugsweise bei der Abfallverbrennung bekannt. Bei diesem Verfahren wird eine synthetische Verbrennungsluft zur Pyrolyse eingesetzt, die aus einem Verbrennungsabgas und aus Sauerstoff, der durch Luftzerlegung gewonnen wurde, besteht.

Der Erfindung liegt die Aufgabe zugrunde, den Einsatz eines weiteren Rauchgases für die Staubfeuerung eines Kohlekraftwerks vorzuschlagen.

Die Aufgabe wird erfindungsgemäß durch die im Kennzeichen des ersten Patentanspruchs beschriebene Maßnahme gelöst. Im weiteren Patentanspruch ist eine bevorzugte Ausgestaltung des erfindungsgemäßen Verfahrens angegeben.

Es wird vorgeschlagen, für die Staubfeuerung eines Kohlekraftwerks zumindest teilweise das Rauchgas einer Müllverbrennungsanlage einzusetzen. Dieser Vorschlag bedingt, daß die Müllverbrennungsanlage und das Kohlekraftwerk in unmittelbarer räumlicher Nachbarschaft errichtet werden.

Der Rauchgasstrom der Müllverbrennungsanlage wird erfindungsgemäß vor dem Einsatz bei der Staubfeuerung zumindest weitgehend von den Problemstoffen befreit. Damit wird erreicht, daß die Problemstoffe in einem vergleichsweise kleinen Volumen konzentriert werden können. Da in der Regel der Rauchgasstrom einer Müllverbrennungsanlage wesentlich geringer ist als derRauchgasstrom einer Kohleverbrennungsanlage, wird durch diese Maßnahme verhindert, daß die Problemstoffe auf den größeren Rauchgasstrom verteilt werden.

Als Problemstoffe sind Schwermetalle, insbesondere Quecksilber, Blei und Cadmium, sowie Salzsäure zu nennen. Die Flugasche wird erfindungsgemäß ebenfalls zuvor abgetrennt, weil sie insbesondere mit Cadmium, aber auch mit Quecksilber beladen ist.

Vorzugsweise wird der Rauchgasstrom der Müllverbrennungsanlage vor der Verwendung zur Staubfeuerung durch ein Gewebefilter und durch einen Salzsäurewäscher geleitet. Im Gewebefilter werden die Flugasche und Schwermetalle, insbesondere Cadmium und Blei, zurückgehalten. Der Salzsäurewäscher dient zur Entfernung des Chlorwasserstoffs und des Quecksilbers. Beide Komponenten können in der bekannten Weise betrieben werden. Insbesondere empfiehlt es sich, aus der Waschflüssigkeit des Salzsäurewäschers kontinuierlich oder diskontinuierlich Quecksilber abzutrennen.

Die Erfindung bietet eine Reihe von Vorteilen. Der wichtigste Vorteil ist, daß bei der Müllverbrennungsanlage auf eine Reihe von Abgasreinigungskomponenten verzichtet werden kann, ohne daß sich eine erhöhte Emission von Schadstoffen ergibt.

Das Rauchgas der Müllverbrennungsanlage braucht vor dem Einsatz zur Staubfeuerung im Kohlekraftwerk nicht von Stickoxiden und Schwefeloxiden befreit zu werden, wodurch die entsprechenden Abgaskomponenten in der Müllverbrennungsanlage eingespart werden. Die Stickoxide werden in der Flamme der Verbrennungseinheit reduziert, während die Schwefeloxide in der Rauchgasreinigungsanlage des Kohlekraftwerks entfernt werden. Da sich in der Regel durch das zusätzliche Rauchgasvolumen aus der Müllverbrennungsanlage das Rauchgasvolumen des Kohlekraftwerks nicht wesentlich erhöht, brauchen hier keine zusätzlichen Maßnahmen getroffen werden.

Weiterhin ist es erfindungsgemäß nicht notwendig, in der Rauchgasreinigungsanlage der Müllverbrennungsanlage Komponenten für die Zerstörung oder Adsorption von polychlorierten Kohlenwasserstoffen, insbesondere von Dioxinen und Furanen, vorzusehen. Gemäß der Erfindung gelangt das Rauchgas der Müllverbrennungsanlage in die Verbrennungseinheit des Kohlekraftwerks, wo diese Schadstoffe ohnehin zerstört werden. Eine Neubildung der polychlorierten Kohlenwasserstoffe im Rauchgas kann ausgeschlossen werden, weil durch die vorhergehende Abtrennung des Chlorwasserstoffs der Chlorgehalt des Rauchgases im Kohlekraftwerk gering ist.

Weitere Vorteile ergeben sich aus der räumlichen Nachbarschaft der Müllverbrennungsanlage und des Kohlekraftwerks, wodurch sich noch weitere Einrichtungen wie z. B. Stromumspannanlagen gemeinsam nutzen lassen.

Die Erfindung wird im folgenden anhand einer Figur näher erläutert.

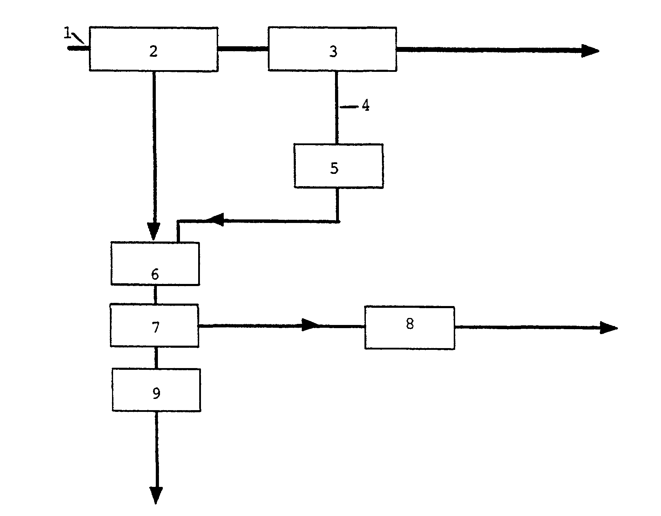

Die Figur zeigt ein Fließschema einer Ausführungsform der Erfindung.

Das Rauchgas 1 einer Müllverbrennungsanlage wird durch ein Gewebefilter 2 geleitet. Dabei wird auf eine Kohledosierung verzichtet. Anschließend durchströmt das Rauchgas einen Salzsäurewäscher 3. Das in dieser Weise vorgereinigte Rauchgas wird ohne weitere Behandlung zur Staubfeuerung in einem Kohlekraftwerk verwendet.

Das Waschwasser 4 des Salzsäurewäschers 3 wird in einer geeigneten Vorrichtung 5, z. B. durch eine Elektrolysezelle, von Quecksilber befreit. Es dient anschließend in einer sauren Extraktionsstufe 6 zur Behandlung der auf dem Gewebefilter abgeschiedenen Flugasche. Nach einer Fest-Flüssig-Trennung 7 wird der Feststoff einer Kompaktierung 8 und anschließend der Verbrennung zugeführt.

Aus dem Flüssiganteil werden in einer weiteren Verfahrensstufe 9 die Schwermetalle, insbesondere das Cadmium, z. B. durch Elektrolyse entfernt, wonach der gereinigte Flüssiganteil als Abwasser an einen Vorfluter abgegeben wird.

## Patentansprüche

1. Verfahren zur Beschickung der Verbrennungseinheit eines Kohlekraftwerks, bei dem die Kohle zumindest teilweise mit Hilfe eines Rauchgasstroms in die Verbrennungseinheit gefördert wird, wobei als Rauchgasstrom der Rauchgasstrom einer Müllverbrennungsanlage eingesetzt wird,
**dadurch gekennzeichnet, daß**
der Rauchgasstrom zuvor weitgehend von Quecksilber und anderen Schwermetallen, Flugasche und Salzsäure befreit wurde.

2. Verfahren nach Anspruch 1,
**dadurch gekennzeichnet, daß**
der Rauchgasstrom der Müllverbrennungsanlage zuvor zur Entfernung der anderen Schwermetalle und der Flugasche durch ein Gewebefilter und zur Entfernung von Salzsäure und Quecksilber durch einen Salzsäurewäscher geleitet wurde.

## Claims

1. Method of charging the combustion unit of a coal-fired power station, wherein at least some of the coal is conveyed into the combustion unit by means of a stream of flue gas, the stream of flue gas of a refuse incinerator being used as the stream of flue gas, **characterised in that** the stream of flue gas was previously freed largely of mercury and other heavy metals, flue ash and hydrochloric acid.

2. Method according to claim 1, **characterised in that** the stream of flue gas of the refuse incinerator was previously conducted through a fibrous filter to remove the other heavy metals and the flue ash and through a hydrochloric acid scrubber to remove hydrochloric acid and mercury.

## Revendications

1. Procédé de chargement d'une unité de combustion d'une centrale à charbon selon lequel on transfère le charbon, au moins en partie, à l'aide d'un flux de fumées dans l'unité de combustion, le flux de fumées étant celui d'une installation d'incinération d'ordures,
**caractérisé en ce que**
on nettoie préalablement le flux de fumées pour en éliminer le mercure et d'autres métaux lourds, les cendres volantes et l'acide chlorhydrique.

2. Procédé de chargement d'une unité de combustion d'une centrale à charbon selon la revendication 1,
**caractérisé en ce que**
pour éliminer les autres métaux lourds et les cendres volantes, on fait passer préalablement le flux de fumées de l'installation d'incinération d'ordures à travers un filtre en tissu et, pour éliminer l'acide chlorhydrique et le mercure, on fait passer le flux dans un laveur d'acide chlorhydrique.
